# EUROPEAN PATENT SPECIFICATION

(11) **EP 4 393 351 B1**
(45) Date of publication and mention of the grant of the patent: **15.10.2025**
(21) Application number: 23220463.6
(22) Date of filing: 28.12.2023
(51) Int. Cl.: A47J 27/00, A47J 43/07

(54) **REMOVABLE COOKING VESSEL HEATER SAFETY LOCK SYSTEM WITH STATUS INDICATOR**
ABNEHMBARES SICHERHEITSVERRIEGELUNGSSYSTEM FÜR KOCHGEFÄSSHEIZER MIT STATUSANZEIGE
SYSTÈME DE VERROUILLAGE DE SÉCURITÉ DE DISPOSITIF DE CHAUFFAGE DE RÉCIPIENT DE CUISSON AMOVIBLE AVEC INDICATEUR D'ÉTAT

(30) Priority: 28.12.2022 US 202263477473 P; 27.12.2023 US 202318396907
(43) Date of publication of application: 03.07.2024
(73) Proprietor: Whirlpool Corporation, Benton Harbor, MI 49022 (US)
(72) Inventor: Bradley, Samuel J., Benton Harbor, Michigan, 49022 (US); Haney, Edward James, Benton Harbor, Michigan, 49022 (US); Leitert, Andrew John, Benton Harbor, Michigan, 49022 (US); Shewale, Pravin R., Benton Harbor, Michigan, 49022 (US)
(74) Representative: Eisenführ Speiser

(56) References cited:
- WO-A1-2016/074743
- WO-A1-2017/077517
- CN-A- 110 558 871
- CN-A- 113 576 249
- KR-A- 20130 068 095

## Description

### FIELD OF THE DISCLOSURE

The present disclosure generally relates to a food processing appliance, and, more specifically, to a food processing appliance with a heating component and a temperature dependent catch assembly.

### BACKGROUND

Food processing appliances typically include several complementary appliances or accessories for various types of food processing. The accessories are typically releasably connected to the food processing appliance. Many of these appliances heat food as part of the food processing functionality (e.g., for making soups and other heated food). As such, a user may be exposed to heated components of the appliance when it is disconnected from the food processing appliance. This exposure can create discomfort to human touch or potentially harm countertons around a kitchen.

CN110558871A discloses a food processing appliance comprising a heating component operably connected to the base and configured to selectively receive a vessel and generate heat above a temperature threshold; at least one latch including a locked position that secures the heating component to the vessel and an unlocked position that permits removal of the heating component from the vessel.

Accordingly, the present disclosure relates to a food processing appliance with a heating component and a temperature dependent catch assembly that only allows a user to remove the appliance after it has cooled below a temperature threshold.

### SUMMARY OF THE DISCLOSURE

According to the invention, a food processing appliance includes a base. A heating component operably connects to the base and is configured to selectively receive a vessel and generate heat above a temperature threshold. At least one latch includes a locked position that secures the heating component to the vessel and an unlocked position that permits removal of the heating component from the vessel. A temperature dependent catch assembly is configured to retain the at least one latch in the locked position above the temperature threshold and release the at least one latch below the temperature threshold.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a side elevational view of a food processing appliance according to the invention;
FIG. 2 is a side cross-sectional view of a food processing appliance according to the invention;
FIG. 3 is a side cross-sectional view of a heating component and a base of a food processing appliance in a disassembled condition according to the invention;
FIG. 4 is a side cross-sectional view of a food processing appliance with a heating component and a vessel according to the invention;
FIG. 5 is an enlarged side cross-sectional view of a food processing appliance with a heating component and a vessel in an unlocked position according to the invention;
FIG. 6 is an enlarged side cross-sectional view of a food processing appliance with a heating component and a vessel in a locked position according the invention;
FIG. 7 is a top perspective view of a partially disassembled heating component according to the invention;
FIG. 8 is a top perspective view of a partially disassembled latch and housing of a heating component according to the invention; and
FIG. 9 is a side cross-sectional view of a food processing appliance with an indicator component according to the invention.

The components in the figures are not necessarily to scale, emphasis instead being placed upon illustrating the principles described herein.

### DETAILED DESCRIPTION

The present illustrated embodiments reside primarily in combinations of method steps and apparatus components related to a food processing appliance with a heating component and a temperature dependent catch assembly. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

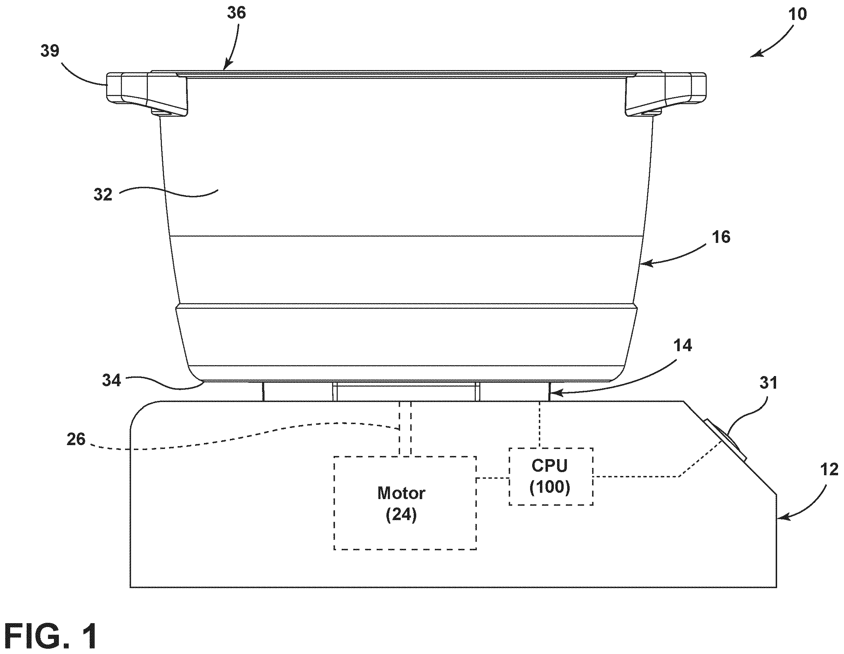

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a . . . " does not, without more constraints, preclude the existence of additional identical elements in the process, method, article, or apparatus that comprises the element.

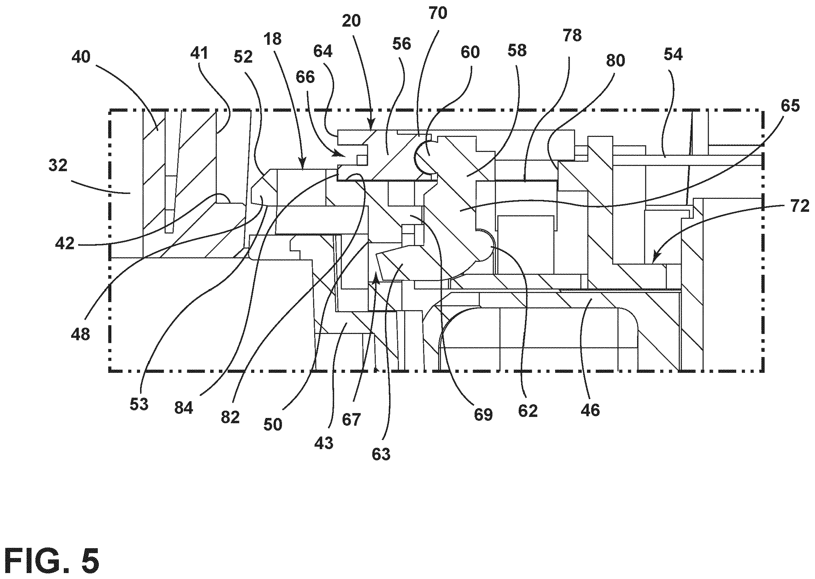

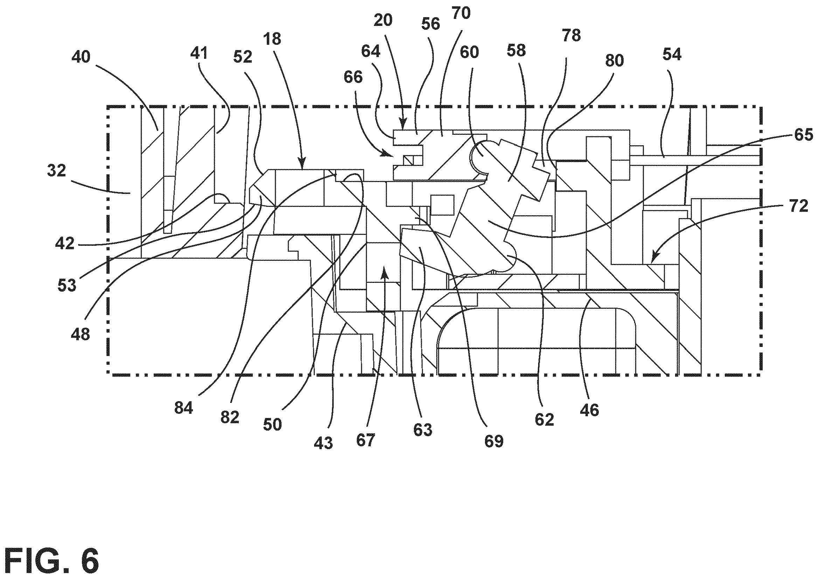

Referring to FIGS. 1-8, reference numeral 10 generally designates a food processing appliance. The food processing appliance 10 includes a base 12 and a heating component 14 operably connected to the base 12 and configured to selectively receive a vessel 16 and generate heat above a temperature threshold. At least one latch 18 includes a locked position (FIG. 6) that secures the heating component 14 to the vessel and an unlocked position (FIG. 5) that permits removal of the heating component 14 from the vessel 16. A temperature dependent catch assembly 20 is configured to retain the at least one latch 18 in the locked position above the temperature threshold and release the at least one latch 18 below the temperature threshold.

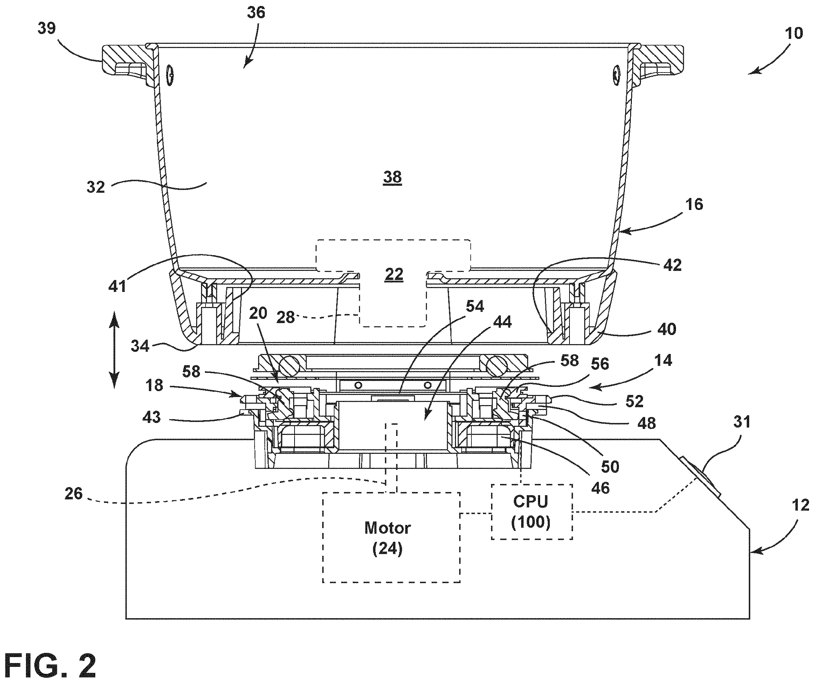

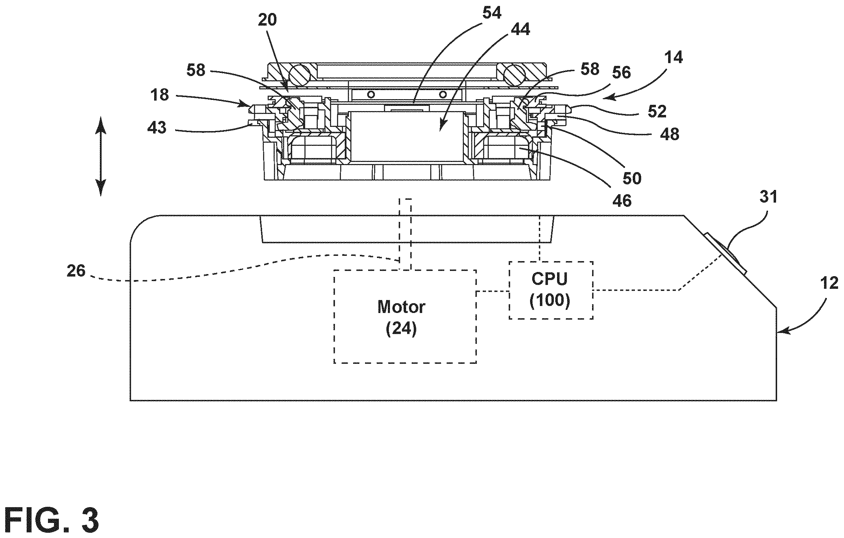

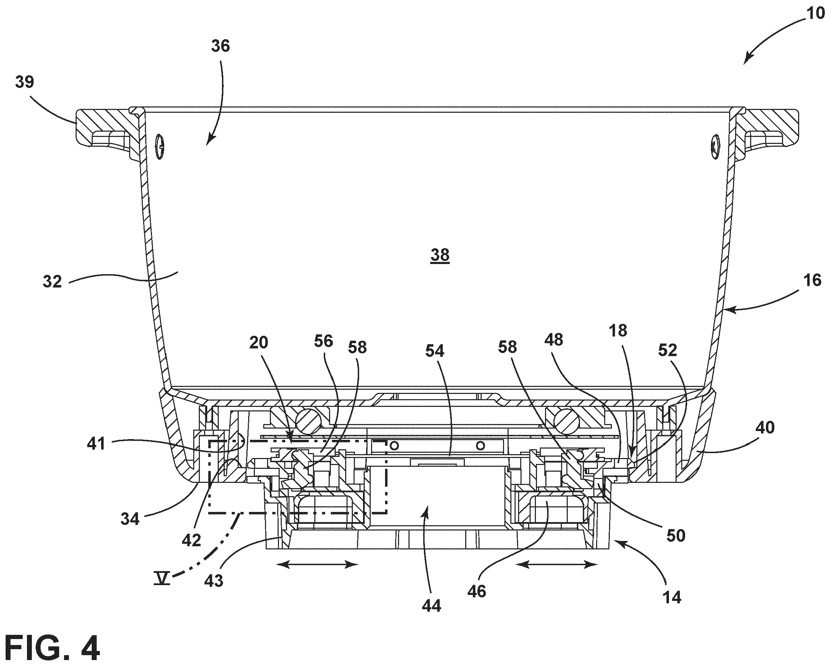

With reference now to FIGS. 1-3, the temperature threshold may correspond to a temperature that can create discomfort to human skin. For example, the temperature threshold may be about 38°C (100°F) or more, for example, about 41°C (105°F) or more, or between about 38°C (100°F) and about 43°C (110°F). In this manner, the catch assembly 20 is configured to prevent discomfort to a user and/or prevent burning of a kitchen countertop when the vessel 16 and/or heating component 14 is removed and placed thereon. The heating component 14 may be integral (e.g., permanently connected) to the base 12, removably connected to the base 12 (FIGS. 3 and 4), integral with the vessel 16 (FIG. 4), or removably connected to the vessel 16 (FIG. 2). In some embodiments, the heating component 14 is removably connected to the base 12 and the vessel 16 (FIG. 3). The at least one latch 18 may, therefore, selectively connect the heating component 14 to the base 12 and/or the vessel 16, and the catch assembly 20 prevents movement of the at least one latch 18 above the temperature threshold. Therefore, it should be appreciated that the principle operation of the at least one latch 18 and catch assembly 20 may be applied to various coupling configurations of the base 12, the vessel 16, and the heating component 14. More particularly, the latch 18 and catch assembly 20 may prevent movement of the vessel 16 relative to the heating component 14 or the base 12 relative to the heating component 14. In addition to heating food within the vessel 16, the vessel 16 may include a variety of tools 22 (FIG. 2) that process the food contents in the vessel 16. For example, the vessel 16 may be configured as a blender and the tool 22 may include blending blades rotatable within the vessel 16.

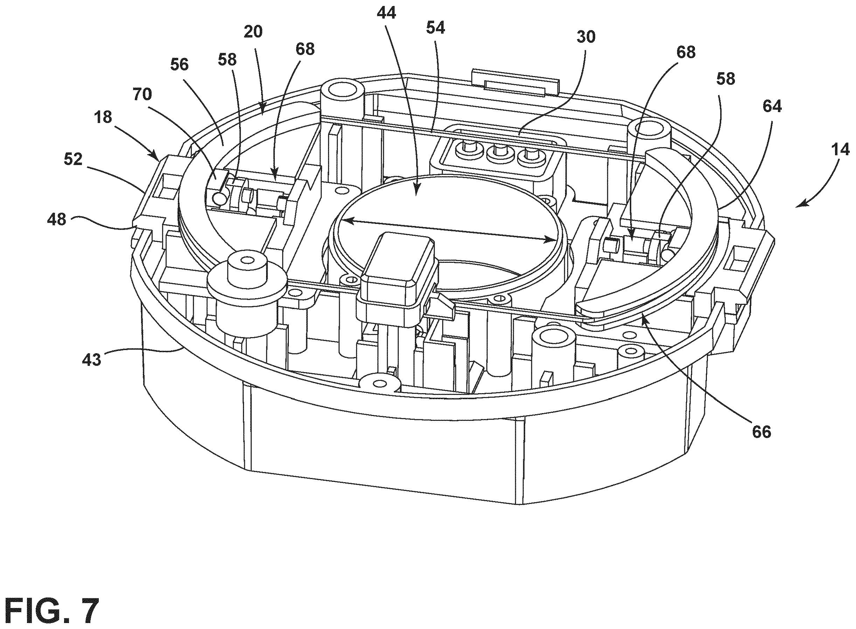

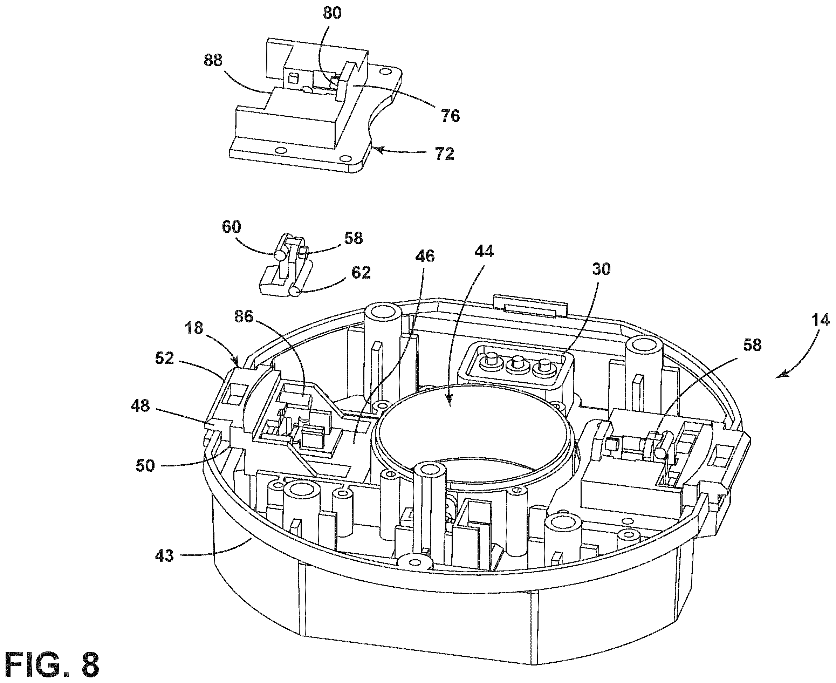

With continued reference to FIGS. 1-3, in some embodiments, the heating component 14 is selectively connected to the vessel 16 with the at least one latch 18. The base 12 may include a motor 24, and a control system 100 is operably connected to the motor 24. The motor 24 is configured to rotatably power a drive mechanism or output drive hub 26, which, in turn, rotatably drives the tool 22. The tool 22 may connect to the output drive hub 26 via an input drive hub 28 (FIG. 2). An electrical connection 30 (FIGS. 7 and 8) may connect the base 12 to the heating component 14. A user interface 31 may be operably connected to the control system 100 for selecting user options relating to the processing functionality (e.g., warming the heating component 14 and functionalities associated with the tool 22). The vessel 16 may include a vessel body 32 extending between a bottom surface 34 and a top opening 36 to define a cavity 38 (FIG. 2). A handle 39 may be connected to the vessel body 32 to facilitate moving the vessel 16 on and off the base 12, the heating component 14, and/or around a kitchen environment. The bottom surface 34 defines an annular sidewall 40 including an interior surface 41 defining at least one ridge 42 for connecting to the at least one latch 18 (FIG. 2).

With reference now to FIGS. 2-6, the heating component 14 includes a housing 43 defining a central aperture 44 for permitting the output drive hub 26 and/or the input drive hub 28 to extend at least partially therethrough and operably connect. The at least one latch 18 may include, one, two, i.e., a first and a second latch 18, or more latches 18. The latches 18 may be diametrically opposed. More particularly, the housing 43 may be generally cylindrically shaped and the first latch 18 may be located on an opposite side than the second latch 18. As best illustrated in FIGS. 5 and 6, each latch 18 includes a latch body 46, a latch interface head 48, and a latch neck 50 extending between the latch body 46 and the latch interface head 48. Each latch 18 may be slidable within the housing 43 between the unlocked position and the locked position as indicated by the arrows in FIG. 4. More particularly, the latch 18 may slide outwardly (e.g., in a direction towards on outer perimeter of the housing 43) to enter the locked position. The latch interface head 48 includes an angled top surface 52 to facilitate inward movement as a result of downward pressure from the annular sidewall 40 of the vessel 16. Likewise, the latch interface head 48 may include an angled bottom surface 53 to facilitate connection to the at least one ridge 42. While not explicitly shown, the at least one ridge 42 may be located in discrete locations around the interior surface 41 and equal in number to the latches 18 or, alternatively, may be formed as an annular step extending around the entire interior surface 41 of the annular sidewall 40 on the vessel 16.

With reference now to FIGS. 4-7, the temperature dependent catch assembly 20 may be at least partially formed of a shape-memory alloy. More particularly, the temperature dependent catch assembly 20 includes a wire 54 formed of a shape-memory alloy that compresses above the temperature threshold and decompresses below the temperature threshold. The wire 54 wraps at least partially around at least one carrier 56 that moves in response to the compression and decompression of the wire 54. The at least one carrier 56 may include a pair of diametrically opposed carriers including a first and second carrier 56. Generally, the number of carriers 56 may be equal to or less than the number of latches 18 as, during operation, the carrier 56 facilitates movement of the latches 18. Stated another way, each one of the latches 18 may be operably connected to one of the carriers 56.

With reference now to FIGS. 5 and 6, each latch 18 may be operably connected to an associated carrier 56 with a pivot member 58. The pivot members 58 each include a first pivot joint 60 pivotally connected to the carrier 56 and a second pivot joint 62 pivotally coupled to the housing 43. The pivot members 58 each also include a boot 63 that, when articulated by energy from the compression, pushes an associated latch 18 outwardly upon pivotal moment in a first direction until the angled bottom surface 53 of the latch interface head 48 extends over the at least one ridge 42. More particularly, as the heating component 14 reaches above the temperature threshold, the wire 54 compresses and moves the carriers 56 towards one another to cause the pivot members 58 to pivotally move (i.e., articulate) in the first direction thereby pushing both latches 18 outwardly into engagement with the at least one ridge 42. The pivot member 58 includes a pivot member body 65 that extends from the first pivot joint 60 to the boot 63. In some embodiments, the latch 18 includes a boot aperture 67 that accommodates the boot 63 in a non-articulated position (FIG. 5). A latch tab 69 may be located over the boot aperture 67. In such embodiments, as the pivot member 58 is moved to an articulated position (FIG. 6), the pivot member body 65 initially pushes against the latch tab 69, moving the latch 18 until the boot 63 can articulate out of the boot aperture 67 and into pushing engagement against the latch tab 69 or a proximate surface of the latch 18.

With reference now to FIGS. 7 and 8, each carrier 56 includes an outer surface 64 defining a track 66. The wire 54 may be configured as a ring-shaped band or closed loop that is retained within each track 66. The wire 54 may be assembled in a closed loop or otherwise include ends that are otherwise fused, tied, and/or the like to form the closed loop. In some embodiments, the carriers 56 and/or latches 18 may be biased outwardly by a spring member (not shown), such that the latches 18 are biased into the unlocked position when the wire 54 is below the temperature threshold. The biasing force of the spring member is overcome when the wire 54 is compressed as a result of exposure to the temperature threshold. Each carrier 56 may define a bay 68 (FIG. 7) with a first pivot connection 70 engaged with the first pivot joint 60. The first pivot connection 70 may be engaged with the first pivot joint 60 within the bay 68 and substantially aligned with the wire 54, such that the force of the wire 54 is directly imparted on the first pivot joint 60.

With reference now to FIG. 8, the housing 43 includes at least one retainer plate 72 (e.g., an equal number of retainer plates 72 to latches 18) that includes a bridge portion 76 that extends over the latch 18 (e.g., a pair of retainer plates 72 for each latch 18). The bridge portion 76 defines a first cam surface 78 (FIG. 5) having a first abutment step 80 and the latch 18 defines a second cam surface 82 defining a second abutment step 84 (FIG. 5). The first and second cam surfaces 78, 82 are located between the first and second abutment steps 80, 84 and define space for the carrier 56 to travel between the compressed and decompressed conditions. The latch 18 includes a pair of posts 86, and the retainer plate 72 includes a pair of post receiving chambers 88 that slideably receive the posts 86 and guide relative movement between the latch 18 and the retainer plate 72. More particularly, the retainer plate 72 may be statically coupled to the housing 43 and the latch associated with the retainer plate 72 may travel relative thereto. In some embodiments, the second pivot joint 62 pivotally connected to the retainer plate 72.

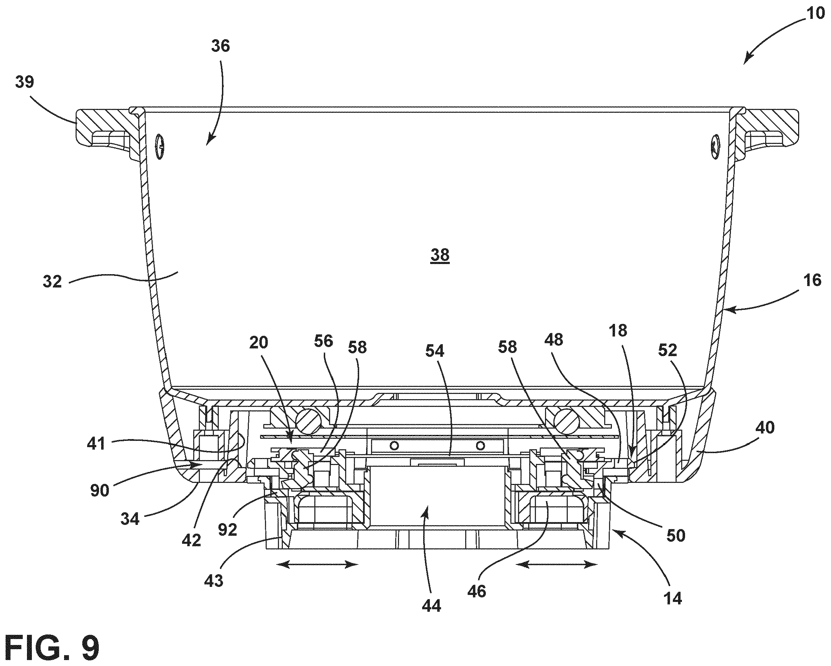

With reference now to FIG. 9, the food processing appliance 10 may include an indicator component that is configured to notify a user when the vessel 16 and/or heating component 14 can be removed (i.e., once the heating component 14 and/or wire 54 is below the temperature threshold). In some embodiments, the indicator component may include a window 90 that allows a user to view the position of the latch 18, the pivot member 58, the carrier 56, or other components of the food processing appliance 10 that move as a result of compression and decompression of the wire 54. In some embodiments, the viewable component is color coded. For example, a first color indicia on the viewable component may be visible when the latch 18 is in the unlocked position and a second color indicia on the viewable component may be visible when the latch 18 is in the locked position. In still further embodiments, a light, such as a light-emitting diode (LED) may be located on the viewable component and only visible in one of the locked and unlocked positions. In some embodiments, the indicator component may be a physical structure, such as an indicator member 92 that is connected to the heating component 14 and moves into user visibility during the compression and decompression of the wire 54 to notify a user if the latch 18 is retained or released by the catch assembly 20 (i.e., if the latch is in the locked or unlocked position). In some embodiments, the indicator member 92 may extend out of a through hole in the housing 43 in one of the locked or the unlocked positions and retract back into the through hole in the other of the locked or unlocked positions. In still further embodiments, the indicator member 92 may include a color indicia or a light that becomes visible during movement of the latch 18 between positions. In still further embodiments yet, the indicator member 92 may be physically connected to the previously described viewable component and is visible through the window 90. The indicator component may of the aforedescribed examples may be configured to notify a user of the latch 18 (i.e., locked and unlocked position) or the position of other components such as the pivot member 58 or the carrier 56 that move as a result of compression and decompression of the wire 54.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

## Claims

1. A food processing appliance (10) comprising:
a base (12);
a heating component (14) operably connected to the base (12) and configured to selectively receive a vessel (16) and generate heat above a temperature threshold;
at least one latch (18) including a locked position that secures the heating component (14) to the vessel (16) and an unlocked position that permits removal of the heating component (14) from the vessel (16);
**characterized by**
a temperature dependent catch assembly (20) configured to retain the at least one latch (18) in the locked position above the temperature threshold and release the at least one latch (18) below the temperature threshold.

2. The food processing appliance (10) of claim 1, wherein the temperature dependent catch assembly (20) is at least partially formed of a shape-memory alloy.

3. The food processing appliance (10) of claim 2, wherein the temperature dependent catch assembly (20) includes a wire (54) configured to compress above the temperature threshold and decompress below the temperature threshold.

4. The food processing appliance (10) of claim 3, wherein the wire (54) wraps at least partially around at least one carrier (56) that moves in response to the compression and decompression of the wire (54) and the at least one latch (18) is operably coupled to the at least one carrier (56).

5. The food processing appliance (10) as in one of claims 1-4, wherein the at least one latch (18) is slidable between the locked position and the unlocked position.

6. The food processing appliance (10) of claim 4, wherein the at least one carrier (56) defines a track (66) and the wire (54) is located in the track (66).

7. The food processing appliance (10) as in claim 4 or claim 6, wherein the at least one carrier (56) includes first carrier (56) and a second carrier (56) in an opposing relationship and the at least one latch (18) includes a first latch (18) operably coupled to the first carrier (56) and a second latch (18) operably coupled to the second carrier (56).

8. The food processing appliance (10) as in claim 3 or claim 4, wherein an indicator member (92) is coupled to the heating component (14) and is configured to move during the compression and decompression of the wire (54) to notify a user if the at least one latch (18) is retained or released by the temperature dependent catch assembly (20).

9. The food processing appliance (10) as in one of claims 1-4, wherein the vessel (16) includes a food processing tool (22) configured to be driven by the base (12).

10. The food processing appliance (10) as in one of claims 3, 4, or 6, wherein the temperature dependent catch assembly (20) includes a pivot member (58), the wire (54) compresses above the temperature threshold moving the pivot member (58) to an articulated position in order to push the latch (18) into the locked position and decompress below the temperature threshold to return the pivot member (58) to a non-articulated position and release the latch (18) below the temperature threshold.

11. The food processing appliance (10) as in claim 1 or claim 10, wherein the latch (18) is slideably located in a retainer plate (72), the retainer plate (72) defining one of a post (86) or a post receiving chamber (88) and the latch (18) including the other of the post (86) or the post receiving chamber (88).

12. The food processing appliance (10) of claim 11, wherein the heating component (14) is located in a housing (43) and the retainer plate (72) is statically coupled to the housing (43).

13. The food processing appliance (10) as in one of claims 3, 4, or 6, wherein the carrier (56) includes an outer surface that is rounded defining a track (66) and the wire (54) is located in the track (66).

14. The food processing appliance (10) of claim 10, wherein an inner surface of the carrier (56) defines a first pivot connection (70) and the pivot member (58) includes a first pivot joint (60) pivotally connected to the first pivot connection (70).

15. The food processing appliance (10) as in one of claims 1-4, wherein the heating component (14) is located in a housing (43) and the housing (43) defines a window (90) to the latch (18) for visually notifying a user that the latch (18) is in the unlocked position.

## Patentansprüche

1. Lebensmittelverarbeitungsgerät (10), umfassend:
eine Basis (12);
eine Heizkomponente (14), die funktionell mit der Basis (12) verbunden und so konfiguriert ist, dass sie selektiv ein Gefäß (16) aufnimmt und Wärme oberhalb eines Temperaturschwellenwerts erzeugt;
mindestens einen Riegel (18) mit einer verriegelten Position, die die Heizkomponente (14) an dem Gefäß (16) sichert, und einer entriegelten Position, die das Entfernen der Heizkomponente (14) von dem Gefäß (16) ermöglicht; **gekennzeichnet durch**
eine temperaturabhängige Verriegelungsanordnung (20), die so konfiguriert ist, dass sie den mindestens einen Riegel (18) oberhalb des Temperaturschwellenwerts in der verriegelten Position hält und den mindestens einen Riegel (18) unterhalb des Temperaturschwellenwerts freigibt.

2. Lebensmittelverarbeitungsgerät (10) nach Anspruch 1, wobei die temperaturabhängige Verriegelungsanordnung (20) zumindest teilweise aus einer Formgedächtnislegierung gebildet ist.

3. Lebensmittelverarbeitungsgerät (10) nach Anspruch 2, wobei die temperaturabhängige Verriegelungsanordnung (20) einen Draht (54) umfasst, der so konfiguriert ist, dass er oberhalb des Temperaturschwellenwerts komprimiert und unterhalb des Temperaturschwellenwerts dekomprimiert wird.

4. Lebensmittelverarbeitungsgerät (10) nach Anspruch 3, wobei der Draht (54) zumindest teilweise um mindestens einen Träger (56) gewickelt ist, der sich als Reaktion auf die Kompression und Dekompression des Drahts (54) bewegt, und der mindestens eine Riegel (18) funktionell mit dem mindestens einen Träger (56) verbunden ist.

5. Lebensmittelverarbeitungsgerät (10) nach einem der Ansprüche 1-4, , wobei der mindestens eine Riegel (18) zwischen der verriegelten Position und der entriegelten Position verschiebbar ist.

6. Lebensmittelverarbeitungsgerät (10) nach Anspruch 4, wobei der mindestens eine Träger (56) eine Spur (66) definiert und der Draht (54) in der Spur (66) angeordnet ist.

7. Lebensmittelverarbeitungsgerät (10) nach Anspruch 4 oder Anspruch 6, wobei der mindestens eine Träger (56) einen ersten Träger (56) und einen zweiten Träger (56) umfasst, die sich gegenüberliegen, und der mindestens eine Riegel (18) einen ersten Riegel (18) umfasst, der funktionell mit dem ersten Träger (56) verbunden ist, und einen zweiten Riegel (18), der funktionell mit dem zweiten Träger (56) verbunden ist.

8. Lebensmittelverarbeitungsgerät (10) nach Anspruch 3 oder Anspruch 4, wobei ein Anzeigeelement (92) mit der Heizkomponente (14) gekoppelt und so konfiguriert ist, dass es sich während der Kompression und Dekompression des Drahts (54) bewegt, um einem Benutzer mitzuteilen, ob der mindestens eine Riegel (18) durch die temperaturabhängige Verriegelungsbaugruppe (20) zurückgehalten oder freigegeben wird.

9. Lebensmittelverarbeitungsgerät (10) nach einem der Ansprüche 1-4, wobei das Gefäß (16) ein Lebensmittelverarbeitungswerkzeug (22) enthält, das so konfiguriert ist, dass es von der Basis (12) angetrieben wird.

10. Lebensmittelverarbeitungsgerät (10) nach einem der Ansprüche 3, 4 oder 6, wobei die temperaturabhängige Verriegelungsanordnung (20) ein Schwenkelement (58) aufweist, wobei der Draht (54) oberhalb des Temperaturschwellenwerts komprimiert wird und das Schwenkelement (58) in eine ausgelenkte Position bewegt, um den Riegel (18) in die verriegelte Position zu drücken, und unterhalb des Temperaturschwellenwerts dekomprimiert wird, um das Schwenkelement (58) in eine nicht ausgelenkte Position zurückzubringen und den Riegel (18) unterhalb des Temperaturschwellenwerts freizugeben.

11. Lebensmittelverarbeitungsgerät (10) nach Anspruch 1 oder Anspruch 10, wobei der Riegel (18) verschiebbar in einer Halteplatte (72) angeordnet ist, wobei die Halteplatte (72) entweder einen Pfosten (86) oder eine Pfostenaufnahmekammer (88) definiert und der Riegel (18) den anderen von dem Pfosten (86) der Pfostenaufnahmekammer (88) beinhaltet.

12. Lebensmittelverarbeitungsgerät (10) nach Anspruch 11, wobei die Heizkomponente (14) in einem Gehäuse (43) angeordnet ist und die Halteplatte (72) statisch mit dem Gehäuse (43) gekoppelt ist.

13. Lebensmittelverarbeitungsgerät (10) nach einem der Ansprüche 3, 4 oder 6, wobei der Träger (56) eine Außenfläche aufweist, die abgerundet ist und eine Spur (66) definiert, und der Draht (54) in der Spur (66) angeordnet ist.

14. Lebensmittelverarbeitungsgerät (10) nach Anspruch 10, wobei eine Innenfläche des Trägers (56) eine erste Schwenkverbindung (70) definiert und das Schwenkelement (58) ein erstes Schwenkgelenk (60) aufweist, das schwenkbar mit der ersten Schwenkverbindung (70) verbunden ist.

15. Lebensmittelverarbeitungsgerät (10) nach einem der Ansprüche 1-4, , wobei die Heizkomponente (14) in einem Gehäuse (43) angeordnet ist und das Gehäuse (43) ein Fenster (90) zum Riegel (18) definiert, um einem Benutzer visuell anzuzeigen, dass sich der Riegel (18) in der entriegelten Position befindet.

## Revendications

1. Appareil de traitement d'aliments (10) comprenant :
une embase (12) ;
un composant de chauffage (14) relié de manière fonctionnelle à l'embase (12) et configuré pour recevoir de manière sélective un récipient (16) et générer de la chaleur au-dessus d'un seuil de température ;
au moins un loquet (18) comportant une position verrouillée qui fixe le composant de chauffage (14) au récipient (16) et une position non verrouillée qui permet le retrait du composant de chauffage (14) du récipient (16) ;
**caractérisé par**
un ensemble d'encliquetage dépendant de la température (20) configuré pour retenir l'au moins un loquet (18) dans la position verrouillée au-dessus du seuil de température et libérer l'au moins un loquet (18) en dessous du seuil de température.

2. Appareil de traitement d'aliments (10) selon la revendication 1, dans lequel l'ensemble d'encliquetage dépendant de la température (20) est formé au moins en partie d'un alliage à mémoire de forme.

3. Appareil de traitement d'aliments (10) selon la revendication 2, dans lequel l'ensemble d'encliquetage dépendant de la température (20) comporte un fil (54) configuré pour se comprimer au-dessus du seuil de température et se décomprimer en dessous du seuil de température.

4. Appareil de traitement d'aliments (10) selon la revendication 3, dans lequel le fil (54) s'enroule au moins en partie autour d'au moins un support (56) qui se déplace en réponse à la compression et à la décompression du fil (54) et l'au moins un loquet (18) est couplé de manière fonctionnelle à l'au moins un support (56).

5. Appareil de traitement d'aliments (10) selon l'une des revendications 1-4, dans lequel l'au moins un loquet (18) peut coulisser entre la position verrouillée et la position non verrouillée.

6. Appareil de traitement d'aliments (10) selon la revendication 4, dans lequel l'au moins un support (56) définit une piste (66) et le fil (54) est situé dans la piste (66).

7. Appareil de traitement d'aliments (10) selon la revendication 4 ou la revendication 6, dans lequel l'au moins un support (56) comporte un premier support (56) et un deuxième support (56) en relation opposée et l'au moins un loquet (18) comporte un premier loquet (18) couplé de manière fonctionnelle au premier support (56) et un deuxième loquet (18) couplé de manière fonctionnelle au deuxième support (56).

8. Appareil de traitement d'aliments (10) selon la revendication 3 ou la revendication 4, dans lequel un organe indicateur (92) est couplé au composant de chauffage (14) et est configuré pour se déplacer pendant la compression et la décompression du fil (54) pour notifier à un utilisateur si l'au moins un loquet (18) est retenu ou libéré par l'ensemble d'encliquetage dépendant de la température (20).

9. Appareil de traitement d'aliments (10) selon l'une des revendications 1-4, dans lequel le récipient (16) comporte un outil de traitement d'aliments (22) configuré pour être entraîné par l'embase (12).

10. Appareil de traitement d'aliments (10) selon l'une des revendications 3, 4 ou 6, dans lequel l'ensemble d'encliquetage dépendant de la température (20) comporte un organe pivot (58), le fil (54) se comprime au-dessus du seuil de température déplaçant l'organe pivot (58) vers une position articulée afin de pousser le loquet (18) dans la position verrouillée et se décomprime en dessous du seuil de température pour ramener l'organe pivot (58) à une position non articulée et libérer le loquet (18) en dessous du seuil de température.

11. Appareil de traitement d'aliments (10) selon la revendication 1 ou la revendication 10, dans lequel le loquet (18) est situé de manière coulissante dans une plaque de retenue (72), la plaque de retenue (72) définissant un parmi un poteau (86) ou une chambre de réception de poteau (88) et le loquet (18) comportant l'autre parmi le poteau (86) ou la chambre de réception de poteau (88).

12. Appareil de traitement d'aliments (10) selon la revendication 11, dans lequel le composant de chauffage (14) est situé dans un logement (43) et la plaque de retenue (72) est couplée de manière statique au logement (43).

13. Appareil de traitement d'aliments (10) selon l'une des revendications 3, 4 ou 6, dans lequel le support (56) comporte une surface extérieure qui est arrondie définissant une piste (66) et le fil (54) est situé dans la piste (66).

14. Appareil de traitement d'aliments (10) selon la revendication 10, dans lequel une surface intérieure du support (56) définit une première liaison pivot (70) et l'organe pivot (58) comporte une première articulation pivot (60) reliée de manière pivotante à la première liaison pivot (70).

15. Appareil de traitement d'aliments (10) selon l'une des revendications 1-4, dans lequel le composant de chauffage (14) est situé dans un logement (43) et le logement (43) définit une fenêtre (90) sur le loquet (18) destinée à la notification visuelle à un utilisateur que le loquet (18) est dans la position non verrouillée.
